# EUROPÄISCHE PATENTANMELDUNG

(11) **EP 1 645 422 A2**
(43) Veröffentlichungstag der Anmeldung: **12.04.2006**
(21) Anmeldenummer: 05020430.4
(22) Anmeldetag: 20.09.2005
(51) Int. Cl.: B41J 11/00

(54) **Verfahren zum Ausdrucken von Formulardrucken an SB-Geräten**

(30) Priorität: 25.09.2004 DE 102004046596
(71) Anmelder: Wincor Nixdorf International GmbH, 33106 Paderborn (DE)
(72) Erfinder: Seibert, Joachim, 59929 Brilon (DE)

(57) **Zusammenfassung**

Selbstbedienungsstation mit angeschlossenem Drucker, bei der nach Identifizierung eines Kunden, für den eine individualisierte Druckdatei vorliegt, der Kunde den Ausdruck aktivieren und einen auf dem Ausdruck lesbaren Authentisierungscode in die Datenstation eingeben kann.

## Beschreibung

Die Erfindung betrifft ein Verfahren zum Ausdrucken von Formulardrucken an einer Selbstbedienungsstation mit Druckfunktion in einem Netzwerk mit Servern.

Selbstbedienungsstationen, insbesondere bei Banken, bieten dem Kunden eine Erledigung von standardisierten Bankgeschäften auch außerhalb der Öffnungszeiten. Für andere Vorgänge ist es möglich, dass der Kunde während der Geschäftszeiten durch einen Telefonanruf mit einem Mitarbeiter der Bank beispielsweise eine Kreditgewährung vereinbart. Der Mitarbeiter füllt ein Formular an seinem Arbeitsplatz elektronisch aus, druckt es und verschickt es per Briefpost an den Kunden, der es unterschreibt und in einen Briefkasten einwirft. Nach mehreren Tagen liegt das unterschriebene Formular dem Mitarbeiter der Bank vor, der dann erst den Vorgang abschließen kann.

Die Erfindung erlaubt eine deutliche Verkürzung dahingehend, dass der Kunde am gleichen Tage außerhalb der Öffnungszeiten bei der Bank das ausgefüllte Formular per Selbstbedienung abholen, unterschreiben und in den Briefkasten der Bank einwerfen kann, so dass der Vorgang spätestens am folgenden Tag abgeschlossen werden kann.

Es handelt sich dabei um eine Selbstbedienungsstation mit angeschlossenem Drucker, bei der nach Identifizierung eines Kunden, für den eine individualisierte Druckdatei vorliegt, der Kunde den Ausdruck aktivieren und einen auf dem Ausdruck lesbaren Authentisierungscode in die Datenstation eingeben kann.

Hierzu wird eine Selbstbedienungsstation verwendet, die entweder ohnehin einen Drucker umfasst, oder die mit einem Drucker verbunden ist, der von mehreren Selbstbedienungsstationen gemeinsam benutzt wird. Derartige Selbstbedienungsstationen sind bekannt, bei denen der Kunde Kontoauszüge drucken und einfache Banktransaktionen wie Überweisungen durchführen kann. Diese Selbstbedienungsstationen sind per Datennetzwerk an einen Server angeschlossen, von dem aus zumindest die variablen Daten der Bedienungsoberfläche wie auch die Daten der Kontoauszüge bezogen werden und über den die Identifizierung und Authentifizierung des jeweiligen Kunden erfolgt.

Für den Einsatz der Erfindung wird zunächst auf dem Server für einen bestimmten Kunden eine individualisierte und dem Kunden zugeordnete Druckdatei erstellt. Dies kann durch einen Mitarbeiter der Bank an seinem Arbeitsplatz erfolgen. Möglicherweise verwendet der Sachbearbeiter Programme wie "Open Office", "Adobe Reader" oder "Microsoft Word", mit denen Formulare angezeigt und variable Daten eingetragen werden können. Danach wird ein Druck angestoßen und so eine individualisierte Druckdatei erstellt, beispielsweise im PDF-Format. Diese Datei wird vom Sachbearbeiter dem Kunden zugeordnet und auf dem Server abgelegt.

Alternativ kann ein HTML-Formular verwendet werden, das vom Sachbearbeiter ausgefüllt und dessen variable Daten abgespeichert werden. Diese Lösung hat den Vorteil, dass nur die variablen Daten gespeichert werden müssen und das dynamische Vorbesetzen von Feldern einfacher ist. Im Server werden dann die variablen Daten, meist im XML-Format, im Datenbereich des Kunden abgelegt. Die Bezeichnung 'individualisierte Druckdatei' ist also abstrakt zu verstehen und kann auch ein Datensatz in einer Datenbank sein, in dem eine Maske angegeben ist, die mit den Daten des Datensatzes gefüllt ein auszudruckendes Formular ergibt.

Benutzt daraufhin der Kunde eine Selbstbedienungsstation der Bank, so wird zunächst seine Identität bestimmt. Derzeit werden hierzu Magnetstreifenkarten verwendet; dies können genauso gut

Chipkarten mit oder ohne Kontakten, Transponder usw. sein.

Technisch würde auch die Eingabe der Kontonummer ausreichend sein, so dass in diesem Fall der Identifikationsleser eine numerische Tastatur wäre.

Mit Bestimmung der Identität des Kunden ist der Zugriff auf die für die Selbstbedienungsstation zugelassenen Daten möglich. Dabei wird nunmehr festgestellt, dass für den Kunden eine individualisierte Druckdatei vorliegt. Üblicherweise wird ein Auswahlmenü auf einem Bildschirm der Selbstbedienungsstation aufgebaut, mit dem der Kunde verschiedene Funktionen, meist durch 'soft keys', d.h. am Büdschirmrand angebrachte Tasten, auswählen kann. In diesem Fall wird in das Auswahlmenü der Ausdruck der individualisierten Druckdatei mit aufgenommen. Zweckmäßig ist dabei ein Titel angegeben, der den Inhalt kennzeichnet. Es ist dem Fachmann auch problemlos möglich, die Benutzerschnittstelle so zu gestalten, dass die individualisierten Druckdateien vorab auf dem Bildschirm anzeigbar sind.

In jedem Falle kann der Kunde nunmehr durch eine Eingabefunktion, hier den passenden 'soft key', den Druck der Druckdatei bewirken.

Sodann wird der Kunde den Inhalt prüfen, unterschreiben und den unterschriebenen Ausdruck in den internen Briefkasten der Bank einwerfen.

Bei einer Fortbildung der Erfindung kann der Vorgang vom Kunden nach dem Ausdruck unmittelbar elektronisch abgeschlossen werden. Hierzu gibt der Kunde einen Autorisierungscode ein, wodurch er seine Zustimmung zu dem erhaltenen Angebot anzeigt. Dieser Autorisierungscode kann die für Geldabhebungen ohnehin vorhandene PIN sein. Besser ist es jedoch, um einen direkten Bezug zu dem Ausdruck zu erhalten, dass der Autorisierungscode als (Pseudo-) Zufallszahl im Rahmen der Erstellung des Druckdatei erzeugt, bevorzugt mit in den Ausdruck aufgenommen und parallel zu den Druckdaten bei den Kundendaten vermerkt wird. Durch das Eingeben des nur auf dem Ausdruck vorhandenen Autorisierungscodes ist gesichert, dass der Kunde auch den Ausdruck angesehen hat.

In einer anderen Weiterbildung wird anstelle einer PIN-Tastatur ein als Graphiktablett bezeichnetes graphisches Unterschriftsfeld an der Selbstbedienungsstation vorgesehen. Solche Eingabefelder sind einerseits von als Notebook bezeichneten portablen Computern bekannt, wo sie zur Maussteuerung dienen. Es kann sich aber genauso gut um einen per Griffel benutzbaren Bildschirm handeln, wie er von als PDA ('personal digital assistant') bezeichneten Taschencomputern bekannt ist. Sofern der Bildschirm der Selbstbedienungsstation bereits diese Funktion der Stifteingabe anbietet, ist ein eigenes Graphiktablett nicht notwendig. Dies gilt auch, wenn ein im Kundenbesitz befindlicher PDA, tastaturloser PC ('tablet PC') oder ein Mobiltelefon über eine drahtlose Schnittstelle als Ein- und Ausgabeeinheiten der Selbstbedienungsstation wirken.

In einer ersten Variante 'schreibt' der Kunde seine Unterschrift auf dieses Graphiktablett; der dabei entstehende Schriftzug wird von dem Graphiktablett digitalisiert und als Autorisierungscode verwendet. An dieser Stelle kann optional eine bekannte Unterschriftserkennung verwendet werden. Alternativ wird vom Kunden der Autorisierungscode 'handschriftlich' eingegeben und von einer Klarschriftlesefunktion in Zeichenfolgen zurückgewandet. Die Zeichenfolge dient als primärer Autorisierungscode; die Strichfolge wird jedoch zusätzlich als weiterer Beleg abgespeichert.

Eine Erweiterung der Erfindung verwendet ein HTML-Formular, das hier jedoch vom Kunden selbst beispielsweise via Internet ausgefüllt wird. Je nach Anforderungen der Bank wird eine Freigabe automatisch oder manuell erfolgen und durch diesen Vorgang der Autorisierungscode in die Druckdaten aufgenommen. Der Kunde begibt sich sodann zu einer erfindungsgemäßen Selbstbedienungsstation bei der Bank, aktiviert den Ausdruck, entnimmt dem Ausdruck den Autorisierungscode, gibt ihn ein, schließt damit den Vorgang ab und erhält damit beispielsweise einen Kredit auf sein Girokonto gebucht, über den er dann sofort mittels Geldausgabeautomat verfügen kann.

## Patentansprüche

1. Verfahren zum Ausdrucken von Formulardrucken an einer Selbstbedienungsstation, die über ein Datennetzwerk mit einem Server verbunden ist und einen Identifikationsleser wie einen Kartenleser, eine Anzeige, eine Eingabeeinheit und einen mit der Selbstbedienungsstation verbundenen Drucker umfasst, wobei:
- mittels des Identifikationslesers die Daten eines Kunden erfasst und die Kundendaten an den Server übermittelt werden,
- der Server mittels der Identifikation eine für den Kunden individualisierte Druckdatei bestimmt,
- auf der Anzeige in einer Funktionsauswahl ein Verweis auf die Druckdatei aufgenommen wird,
- mittels der Eingabeeinheit der Verweis auf die Druckdatei anwählbar ist, und
- die Druckdatei vom Server zu dem Drucker übertragen wird,
**dadurch gekennzeichnet,**
**dass** die Eingabeeinheit eine Autorisierungsfunktion umfasst, die nach dem Ausdruck aktiviert wird und mittels derer ein Autorisierungscode und/oder das Vergleichsergebnis in Bezug auf einen vorab vom Server übermittelten Sollwert, ggf. kryptographisch geschützt, an den Server gesendet wird.

2. Verfahren nach Anspruch 1, wobei die Autorisierungsfunktion durch eine Zeichentastatur gebildet wird und der Autorisierungscode eine Zeichenfolge ist.

3. Verfahren nach Anspruch 2, wobei der Autorisierungscode in dem Ausdruck enthalten ist.

4. Verfahren nach Anspruch 1, wobei die Autorisierungsfunktion als Graphiktablett ausgebildet ist, das nach dem Ausdruck freigeben wird, und wobei die digitalisierten Strichfolgen den Autorisierungscode darstellen.

5. Verfahren nach Anspruch 4, wobei die Strichfolgen einer Funktion für Unterschriftsprüfung zugeführt werden und das Ergebnis der Unterschriftsprüfung den Autorisierungscode darstellt.

6. Verfahren nach Anspruch 5, wobei der Autorisierungscode in dem Ausdruck enthalten ist und die Strichfolgen einer Funktion für Klarschriftlesung zugeführt werden, deren Ergebnis den Autorisierungscode darstellt.
